Europäisches Patentamt

European Patent Office

Office européen des brevets

(11) Publication number: 0 386 393
A1

# EUROPEAN PATENT APPLICATION

(21) Application number: 89830111.4

(22) Date of filing: 10.03.89

(51) Int. Cl.⁵: **B26D 7/00, //B23P13/04**

The title of the invention has been amended (Guidelines for Examination in the EPO, A-III, 7.3).

(43) Date of publication of application: **12.09.90 Bulletin 90/37**

(84) Designated Contracting States: **AT BE CH DE ES FR GB GR LI**

(71) Applicant: **Tognoli, Angela Via Tigullio Rock's, 76 I-16043 Chiavari (Genova)(IT)**

(72) Inventor: **Tognoli, Angela Via Tigullio Rock's, 76 I-16043 Chiavari (Genova)(IT)**

(74) Representative: **Cicogna, Franco Ufficio Internazionale Brevetti Dott.Prof. Franco Cicogna Via Visconti di Modrone, 14/A I-20122 Milano(IT)**

(54) **Slicing machine.**

(57) The low cost apparatus for slicing salami according to the invention comprises a supporting frame (2) housing a driving assembly for rotatively driving the slicing circular blade (3) arranged on the top of the frame, and a salame holding plate-like element (4) which is slidingly mounted on the frame (2) and radially movable with respect to the slicing blade (3), the supporting frame and plate-like element comprising at least an extrusion made section member.

Fig. 1

EP 0 386 393 A1

## LOW COST APPARATUS FOR SLICING SALAMI

### BACKGROUND OF THE INVENTION

The present invention relates to a low cost apparatus for slicing salami.

As is known, apparatus for slicing salami and the like generally consist of a plurality of component portions, made by casting methods.

On the other hand, known casting methods for making the mentioned component parts are rather expensive.

Moreover, such a making method requires further expensive finishing steps which cause the end cost of the slicing apparatus to further increase.

### SUMMARY OF THE INVENTION

Accordingly, the task of the present invention is to overcome the above mentioned drawbacks, by providing an apparatus for slicing salami which has a very reduced cost.

Within the scope of the above task, a main object of the present invention is to provide such an apparatus for slicing salami which has moreover a very reduced size and is very reliable in operation.

According to one aspect of the present invention, the above task and objects, as well as yet other objects, which will become more apparent hereinafter, are achieved by a low cost apparatus for slicing salami comprising a supporting frame housing a driving assembly for rotatively driving a circular slicing blade arranged on the top of said supporting frame, and a salame holding plate-like element, slidingly supported on said supporting frame and radially movable with respect to said slicing blade, characterized in that said supporting frame and plate-like element respectively comprise at least an extruded section member.

### BRIEF DESCRIPTION OF THE DRAWINGS

Further characteristics and advantages of the invention will become more apparent from the following detailed disclosure of a preferred, though not exclusive, embodiment of an apparatus for slicing salami according to the invention, which is illustrated, by way of an indicative but not limitative example, in the figures of the accompany drawing, where:

Figure 1 is a perspective view of the apparatus for slicing salami according to the present invention; and

Figure 2 shows an extruded plate-like element or carriage for supporting salami.

### DESCRIPTION OF THE PREFERRED EMBODIMENT

With reference to the figures of the accompanying drawing, the apparatus for slicing salami according to the invention, which has been overally indicated at the reference number 1, comprisies a supporting frame 2 in the inside of which there is arranged a driving assembly (not shown in the drawing) of any suitable known type, provided for rotatively reciprocating respectively a circular slicing blade 3 arranged on the top of the supporting frame 2 and a plate-like element or carriage generally indicated at the reference number 4.

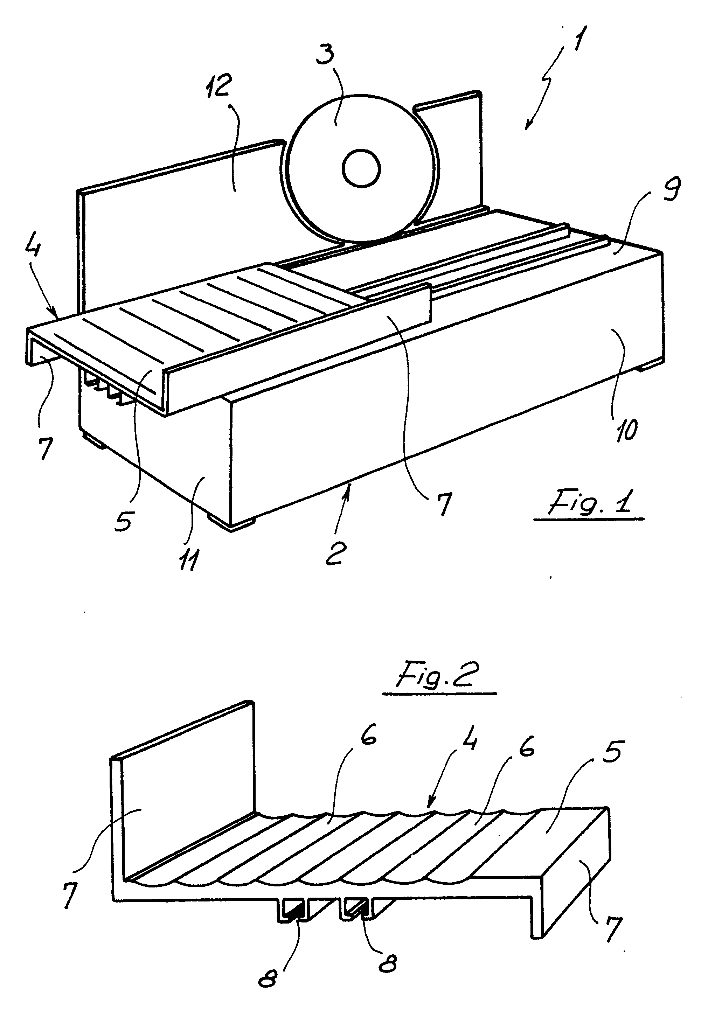

Advantageously, this plate-like element or carriage 4 is made as a single piece by extruding a section member forming said carriage and has a flat surface 5 which, as shown in figure 2, is provided with a plurality of recessed portions 6 adapted to properly hold the salame to by sliced as the apparatus 1 is operated.

More specifically, the section member forming the carriage 4 is moreover provided, at the end portions of the flat surface 5, with two legs 7 each of which perpendicularly extends from the flat surface 5, in an opposite direction with respect to this flat surface.

The carriage 4 is moreover provided at the bottom, that is at the portion opposite to the slicing circular blade 3, with at least a sliding guide and, more specifically, two sliding guides 8 allowing for said carriage to be longitudinally displaced of. the frame 2 in order to alternately bring the salame in contact with the slicing circular blade 3.

Also advantageously, the guides 8 are made in a single piece with the carriage 4 and are obtained by means of a simple extruding operation: accordingly, the thus made piece does not require any additional finishing operations.

From the above disclosure it should be apparent that, in order to further reduce the making cost of the apparatus 1, also the supporting frame 2 of said apparatus can be constructed by assembling several extruded section members.

For example, it is possible to make a single piece section member, adapted to define the sliding surface 9 of the carriage 4 and the two longitudinal side surfaces indicated at the reference number 10.

The closing and coupling surfaces of said side surfaces 10 can be made by using two like section members 11 which are assembled, by means of known restraining means which have not been shown in the drawing, to the section member defining said sliding surface 9 and to said side surfaces 10; in this connection it should be also apparent that also the salame guiding surface 12 can be made in a similar manner.

It has been practically found that the thus made apparatus for slicing salami is particularly advantageous since it is very simple construction wise and can be made with a very reduced cost.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A low cost apparatus for slicing salami comprising a supporting frame housing a driving assembly for rotatively driving a circular slicing blade arranged on the top of said supporting frame, and a salame holding plate-like element, slidingly supported on said supporting frame and radially movable with respect to said slicing blade, characterized in that said supporting frame and plate-like element respectively comprise at least an extruded section member.

2. An apparatus according to claim 1, characterized in that said plate-like element consists of a section member having a flat surface provided, at each end thereof, with a leg which is substantially perpendicular to said flat surface, said legs extending in opposite directions.

3. An apparatus according to claim 1, characterized in that said section member is provided, on the side of said supporting frame, with at least a sliding guide.

4. An apparatus, according to claim 1, characterized in that said supporting frame comprises a plurality of extruded section members assembled to one another by restraining means so as to define a substantially quadrangular body.

_Fig. 1_

_Fig. 2_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A-2 445 201 (MARCAL PAPER MILLS) <br> * Page 3, lines 4-18; figures 1-3 * <br> --- | 1-3 | B 26 D    7/00 // <br> B 23 P    13/04 |
| Y | GB-A- 934 985 (LAN-ELEC LTD) <br> --- | 1-3 | |
| A | GB-A-2 085 792 (DAHLE) <br> --- | 4 | |
| A | EP-A-0 226 363 (BARLOW) <br> ----- | | |
| | | | TECHNICAL FIELDS SEARCHED (Int. Cl.5) |
| | | | B 26 D |

The present search report has been drawn up for all claims

| Place of search | Date of completion of the search | Examiner |
|---|---|---|
| THE HAGUE | 14-11-1989 | BERGHMANS H. F. |